(19) Europäisches Patentamt / European Patent Office / Office européen des brevets

(11) **EP 4 575 374 A1**

(12) **EUROPEAN PATENT APPLICATION**
published in accordance with Art. 153(4) EPC

(43) Date of publication:
25.06.2025 Bulletin 2025/26

(21) Application number: 23854495.1

(22) Date of filing: 17.08.2023

(51) International Patent Classification (IPC):
*F28D 20/02* (2006.01)    *F17C 7/04* (2006.01)
*F17D 1/00* (2006.01)    *F17D 3/01* (2006.01)

(52) Cooperative Patent Classification (CPC):
Y02E 60/14

(86) International application number:
PCT/CN2023/113571

(87) International publication number:
WO 2024/037596 (22.02.2024 Gazette 2024/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.08.2022 CN 202210991164

(71) Applicant: Exa Energy Technology (Shenzhen)
Co. Ltd.
Shenzhen, Guangdong 518063 (CN)

(72) Inventors:
• XIE, Yonghui
  Shenzhen, Guangdong 518063 (CN)
• WANG, Qin
  Shenzhen, Guangdong 518063 (CN)
• WANG, Ding
  Shenzhen, Guangdong 518063 (CN)
• SUN, Lei
  Shenzhen, Guangdong 518063 (CN)
• GUO, Yongliang
  Shenzhen, Guangdong 518063 (CN)
• WANG, Shunsen
  Shenzhen, Guangdong 518063 (CN)
• ZHANG, Di
  Shenzhen, Guangdong 518063 (CN)
• WANG, Xiaoyong
  Shenzhen, Guangdong 518063 (CN)
• WANG, Hai
  Shenzhen, Guangdong 518063 (CN)
• GU, Xiangnong
  Shenzhen, Guangdong 518063 (CN)
• YANG, Biao
  Shenzhen, Guangdong 518063 (CN)

(74) Representative: De Vries & Metman
Overschiestraat 180
1062 XK Amsterdam (NL)

(54) **STORAGE UNIT FOR CARBON DIOXIDE GAS-LIQUID PHASE-CHANGE ENERGY STORAGE SYSTEM, CONTROL METHOD, AND SYSTEM**

(57) The present invention belongs to the technical field of energy storage. Provided are a storage unit for a carbon dioxide gas-liquid phase-change energy storage system, a control method, and system. The storage unit for a carbon dioxide gas-liquid phase-change energy storage system is provided with an energy storage container, a condenser and an energy-storage pressure-maintaining flow path, wherein the energy storage container is used for storing gaseous carbon dioxide and liquid carbon dioxide; the condenser is connected to the energy storage container, and is used for condensing gaseous carbon dioxide into liquid carbon dioxide; the energy-storage pressure-maintaining flow path forms a closed-loop connection with the energy storage container and the condenser; and in an energy storage stage of the energy storage system and in an interval time period of energy storage and energy release, gaseous carbon dioxide in the energy storage container can flow into the condenser via the energy-storage pressure-maintaining flow path, so as to be condensed into liquid carbon dioxide, and then flow back to the energy storage container, so as to stabilize, in the energy storage stage, the pressure of the energy storage container in a design pressure range of the energy storage system. The storage unit can keep the pressure in an energy storage container stable in an energy storage stage.

**(Cont. next page)**

100

energy storage
container 110

120

502

condenser 160

FIG. 1

## Description

## TECHNICAL FIELD

The present disclosure relates to a field of energy storage technology, and more particularly, to a storage unit, a control method, and a system for a carbon dioxide gas-liquid-phase-change energy storage system.

## BACKGROUND

Applications of energy storage technology may largely solve drawbacks of volatility and intermittency in renewable energy power generation, effectively solving the problem of peak shifting and valley filling, and has received increasing attention in recent years. The carbon dioxide gas-liquid-phase-change energy storage technology has gradually attracted widespread attention due to its advantages of simple structure, flexible layout, and high energy storage efficiency.

However, the gas-liquid-phase-change carbon dioxide energy storage system compresses and condenses the carbon dioxide in a gas state at normal temperature and normal pressure into carbon dioxide in a liquid state, which is stored in a liquid storage tank with a certain volume during the energy storage process, as the carbon dioxide in the liquid state in the liquid storage tank increases, the pressure inside the liquid storage tank continues to rise, causing the compressor to change operating conditions and threatening the safe and stable operation of the system. Moreover, during the interval period between the energy storage phase and the energy release phase, when the external ambient temperature rises, the carbon dioxide in the liquid state in the energy storage container absorbs heat and evaporates, causing the pressure in the liquid storage tank to increase beyond the design pressure and affecting the safety of the energy storage system. In addition, during the energy release process, the pressure inside the liquid storage tank continuously decreases with the reduction of the carbon dioxide in the liquid state, leading to variable operating conditions of the turbine and threatening the safe and stable operation of the system.

It should be noted that the information disclosed in the background section above is only for enhancing the understanding of the background of the present disclosure, and therefore may include information that does not constitute prior art known to those skilled in the art.

## SUMMARY

The purpose of the present disclosure is to overcome one or more shortcomings of the prior art and provide a storage unit, a control method, and a system for a carbon dioxide gas-liquid-phase-change energy storage system.

According to a first aspect of the present disclosure, a storage unit of a carbon dioxide gas-liquid-phase-change energy storage system is provided and includes

an energy storage container, configured to store carbon dioxide in a gas state and carbon dioxide in a liquid state;

a condenser, connected to the energy storage container and configured to condense the carbon dioxide in the gas state into the carbon dioxide in the liquid state;

an energy storage pressure-maintaining flow path, where the energy storage pressure-maintaining flow path, the energy storage container and the condenser form a closed-loop connection;

where during an energy storage phase and an interval period between the energy storage phase and an energy release phase of the energy storage system, the carbon dioxide in the gas state inside the energy storage container is capable of flowing through the energy storage pressure-maintaining flow path to the condenser where the carbon dioxide in the gas state is condensed into the carbon dioxide in the liquid state, and then the carbon dioxide in the liquid state flows back to the energy storage container, to maintain a pressure of the energy storage container stable within a design pressure range of the energy storage system during the energy storage phase and the interval period between the energy storage phase and the energy release phase.

According to an embodiment of the present disclosure, an energy storage pressure-maintaining control valve configured to control opening and closing of the flow path is provided on the energy storage pressure-maintaining flow path.

According to an embodiment of the present disclosure, there are a plurality of energy storage containers, and the plurality of energy storage containers are connected in series.

According to an embodiment of the present disclosure, there are a plurality of energy storage containers, and the plurality of energy storage containers are connected in parallel.

According to an embodiment of the present disclosure, each of the plurality of energy storage containers is provided with a gas-phase outflow interface for the carbon dioxide in the gas state to flow out from the energy storage container; the gas-phase outflow interfaces of the plurality of energy storage containers are connected in parallel to the condenser through the energy storage pressure-maintaining control valves.

According to an embodiment of the present disclosure, each of the plurality of energy storage containers is provided with a liquid-phase inflow interface for the carbon dioxide in the liquid state to flow into the energy storage container, a liquid-phase inflow control valve is provided on a connection pipeline between the condenser and the energy storage container, and the liquid-phase inflow interfaces of the plurality of energy storage containers are connected in parallel to the condenser through the liquid-phase inflow control valves.

According to an embodiment of the present disclosure, the storage unit further includes:

an evaporator, connected to the energy storage container and configured to evaporate the carbon dioxide in the liquid state into the carbon dioxide in the gas state;

an energy release pressure-maintaining flow path, where the energy release pressure-maintaining flow path, the energy storage container and the evaporator form a closed-loop connection, such that the carbon dioxide in the liquid state inside the energy storage container is capable of being evaporated into the carbon dioxide in the gas state through the evaporator during the energy release phase of the energy storage system and a part of the carbon dioxide in the gas state flows back to the energy storage container, to maintain the pressure of the energy storage container stable within the design pressure range during the energy release phase.

According to an embodiment of the present disclosure, an energy release pressure-maintaining control valve configured to control opening and closing of the flow path is provided on the energy release pressure-maintaining flow path.

According to an embodiment of the present disclosure, there are a plurality of energy storage containers, and each of the plurality of energy storage containers is provided with a gas-phase inflow interface; the gas-phase inflow interface is configured for the carbon dioxide in the gas state to flow into the energy storage container, and the gas-phase inflow interfaces of the plurality of energy storage containers are connected in parallel to the evaporator through the energy release pressure-maintaining control valves.

According to an embodiment of the present disclosure, there are a plurality of energy storage containers, and each of the plurality of energy storage containers is provided with a liquid-phase outflow interface; the liquid-phase outflow interface is configured for the carbon dioxide in the liquid state to flow out from the energy storage container, a liquid-phase outflow control valve is provided on a connection pipeline between the evaporator and the energy storage container, and the liquid-phase outflow interfaces of the plurality of energy storage containers are connected in parallel to the evaporator through the liquid-phase outflow control valves.

According to a second aspect of the present disclosure, a carbon dioxide gas-liquid-phase-change energy storage system is provided and includes above storage unit.

According to a third aspect of the present disclosure, a control method for a storage unit of a carbon dioxide gas-liquid-phase-change energy storage system is provided and includes

an energy storage phase, where the carbon dioxide in the gas state inside the energy storage container flows through the energy storage pressure-maintaining flow path to the condenser where the carbon dioxide in the gas state is condensed into the carbon dioxide in the liquid state, then the carbon dioxide in the liquid state flows back to the energy storage container, to maintain the pressure of the energy storage container stable within the design pressure range of the energy storage system during the energy storage phase.

In an embodiment of the control method, an interval period between the energy storage phase and the energy release phase, where when the pressure in the energy storage container is greater than a design pressure, the carbon dioxide in the gas state inside the energy storage container flows out through the energy storage pressure-maintaining flow path to the condenser where the carbon dioxide in the gas state is condensed into the carbon dioxide in the liquid state, and the carbon dioxide in the liquid state flows back to the energy storage container, to maintain the pressure of the energy storage container stable within the design pressure range of the energy storage system during the interval period between the energy storage phase and the energy release phase.

According to some embodiments of the present disclosure, during the energy storage phase, the carbon dioxide in the gas state (such as the carbon dioxide in the gas state at normal temperature and normal pressure) in the gas storage bank enters the condenser after passing through the energy storage component and is condensed into the carbon dioxide in the liquid state, and the carbon dioxide in the liquid state enters the energy storage container for storage. The carbon dioxide in the gas state initially stored in the energy storage container enters the condenser through the energy storage pressure-maintaining flow path and is condensed into the carbon dioxide in the liquid state, and the carbon dioxide in the liquid state flows back to the energy storage container. In this way, it may ensure that the carbon dioxide in the liquid state generated by the condenser smoothly flows into the energy storage container, so as to prevent a continuous pressure increase within the energy storage container that could cause the compressor to operate under variable operating conditions, thereby enhancing the safety of the energy storage system.

Furthermore, during the interval period between the energy storage phase and the energy release phase after the end of the energy storage, when the external ambient temperature rises, the carbon dioxide in the liquid state in the energy storage container absorbs heat and evaporates into the carbon dioxide in the gas state, causing the pressure inside the energy storage container to increase; the evaporated carbon dioxide in the gas state in the energy storage container enters the condenser through the energy storage pressure-maintaining flow path for condensation, and the carbon dioxide in the liquid state generated by condensation flows back to the energy storage container, which not only reduces the pressure in the energy storage container to the design pressure range of the energy storage system, improves the safety of the energy storage system, but also avoids the decrease in energy release efficiency caused by the reduction of carbon dioxide in the liquid state for performing work.

It should be understood that the above general description and the subsequent detailed description are only exemplary and explanatory, and cannot limit the present disclosure.

## BRIEF DESCRIPTION OF THE DRAWINGS

The accompanying drawings are incorporated into the specification and form a part thereof, illustrating embodiments in accordance with the present disclosure and used together with the specification to explain the principles of the present disclosure. It is obvious that the drawings described below are only some embodiments of the present disclosure. For those skilled in the art, other drawings may be obtained based on these drawings without creative labor.

FIG. 1 is a principle diagram of a storage unit of a carbon dioxide gas-liquid-phase-change energy storage system in an embodiment of the present disclosure.
FIG. 2 is a principle diagram of a storage unit of a carbon dioxide gas-liquid-phase-change energy storage system in an embodiment of the present disclosure.
FIG. 3 is a principle diagram of a carbon dioxide gas-liquid-phase-change energy storage system in an embodiment of the present disclosure.
FIG. 4 is a principle diagram of a carbon dioxide gas-liquid-phase-change energy storage system in an embodiment of the present disclosure.
FIG. 5 is a principle diagram of a carbon dioxide gas-liquid-phase-change energy storage system in an embodiment of the present disclosure.
FIG. 6 is a principle diagram of a carbon dioxide gas-liquid-phase-change energy storage system in an embodiment of the present disclosure.

Reference numerals:

100, storage unit; 110, energy storage container; 120, energy storage pressure-maintaining flow path; 130, energy release pressure-maintaining flow path; 140, liquid carbon dioxide booster pump; 150, evaporator; 160, condenser; 200, gas storage bank; 300, energy storage component; 310, energy storage heat exchanger; 320, carbon dioxide compressor; 400, energy release component; 410, energy release heat exchanger; 420, turbine generator; 430, carbon dioxide cooler; 501, energy release pressure-maintaining control valve; 502, energy storage pressure-maintaining control valve; 503, first control valve; 504, second control valve; 505, liquid-phase inflow control valve; 506, liquid-phase outflow control valve.

## DETAILED DESCRIPTION

The example implementation will now be described more comprehensively with reference to the accompanying drawings. However, the example embodiments may be implemented in various forms and should not be understood as limited to the embodiments described herein. On the contrary, providing these embodiments enables the present disclosure to be comprehensive and complete, and fully conveys the concept of example embodiments to those skilled in the art. The same reference numerals in the drawings indicate the same or similar structures, therefore their detailed descriptions will be omitted. In addition, the accompanying drawings are only schematic illustrations of the present disclosure and are not necessarily drawn to scale.

Embodiments of the present disclosure provide a carbon dioxide gas-liquid-phase-change energy storage system and a storage unit for the system.

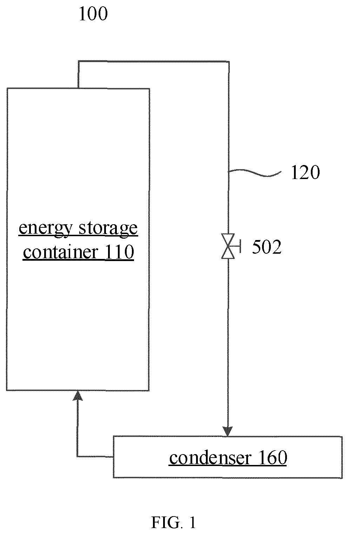

In an embodiment of the present disclosure, referring to FIG. 1, the storage unit 100 includes an energy storage container 110, a condenser 160, and an energy storage pressure-maintaining flow path 120. The energy storage container 110 is configured to store carbon dioxide in a gas state and carbon dioxide in a liquid state; the condenser 160 is connected to the energy storage container 110 and is configured to condense the carbon dioxide in the gas state into the carbon dioxide in the liquid state; the energy storage pressure-maintaining flow path 120 forms a closed-loop connection with the energy storage container 110 and the condenser 160; during an energy storage phase and an interval period between the energy storage phase and an energy release phase of the energy storage system, the carbon dioxide in the gas state inside the energy storage container is capable of flowing through the energy storage pressure-maintaining flow path to the condenser where the carbon dioxide in the gas state is condensed into the carbon dioxide in the liquid state, and then the carbon dioxide in the liquid state flows back to the energy storage container, to maintain a pressure of the energy storage container stable within a design pressure range of the energy storage system during the energy storage phase and the interval period between the energy storage phase and the energy release phase.

The embodiments of the present disclosure also provide a control method for the storage unit (a storage unit with an energy storage pressure-maintaining flow path), and the control method includes:

the energy storage phase, where the carbon dioxide in the gas state inside the energy storage container 110 flows through the energy storage pressure-maintaining 120 flow path to the condenser 160 where the carbon dioxide in the gas state is condensed into the carbon dioxide in the liquid state, then the carbon dioxide in the liquid state flows back to the energy storage container 110, to maintain the pressure of the energy storage container stable within the design pressure range during the energy storage phase;

the interval period between the energy storage phase and the energy release phase, where when the pressure in the energy storage container 110 is greater than a design pressure, the carbon dioxide in the gas state inside the energy storage container 110 flows out through the energy storage pressure-maintaining flow path 120 to the condenser 160 where the carbon dioxide in the gas state is condensed into the carbon dioxide in the liquid state, and the carbon dioxide in the liquid state flows back to the energy storage container 110, to maintain the pressure of the energy storage container stable within the design pressure range during the interval period between the energy storage phase and the energy release phase.

In an embodiment, referring to FIG. 1, an energy storage pressure-maintaining control valve 502 configured to control the opening and closing of the flow path is provided on the energy storage pressure-maintaining flow path 120. The energy storage pressure-maintaining control valve 502 may be opened to enable the energy storage pressure-maintaining flow path 120 to be opened. Accordingly, the energy storage pressure-maintaining control valve 502 may be closed to block the energy storage pressure-maintaining flow path 120.

In some embodiments of the present disclosure, there are a plurality of energy storage containers 110 of the storage unit, and these energy storage containers 110 may be connected in series, in parallel, or through a combination of series and parallel connections.

In an embodiment of the present disclosure, there are a plurality of energy storage containers 110 of the storage unit; and the plurality of energy storage containers are connected in series. In this way, a storage capacity of the storage unit 100 may be increased.

In an embodiment of the present disclosure, there are a plurality of energy storage containers 110 of the storage unit; and the plurality of energy storage containers are connected in parallel. In this way, a storage capacity of the storage unit 100 may be increased.

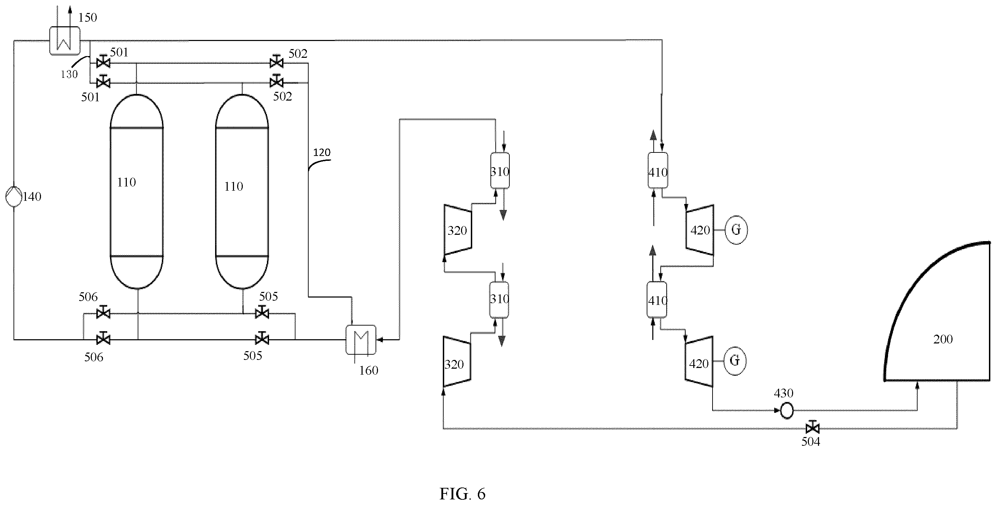

In an embodiment, each of the plurality of energy storage containers is provided with a gas-phase outflow interface, the gas-phase outflow interface is configured for the carbon dioxide in the gas state to flow out from the energy storage container; the gas-phase outflow interfaces of the plurality of energy storage containers are connected in parallel to the condenser through the energy storage pressure-maintaining control valves. For example, referring to FIG. 6, the storage unit is provided with the energy storage pressure-maintaining control valves 502 that correspond one-to-one to the energy storage containers 110; the gas-phase outflow interface of the energy storage container 110 is connected to a first end of the corresponding energy storage pressure-maintaining control valve 502, and a second end of each energy storage pressure-maintaining control valve 502 is connected to an inlet of the condenser 160.

In an embodiment, each of the plurality of energy storage containers is provided with a liquid-phase inflow interface, and the liquid-phase inflow interface is configured for the carbon dioxide in the liquid state to flow into the energy storage container, a liquid-phase inflow control valve is provided on a connection pipeline between the condenser and the energy storage container, and the liquid-phase inflow interfaces of the plurality of energy storage containers are connected in parallel to the condenser through the liquid-phase inflow control valves.

Referring to FIG. 6, the storage unit is provided with liquid-phase inflow control valves 505 that correspond one-to-one to the energy storage containers 110. The liquid-phase inflow interface of the energy storage container 110 is connected to the first end of the corresponding liquid-phase inflow control valve 505, and the second end of each liquid-phase inflow control valve 505 is connected to an outlet of the condenser 160.

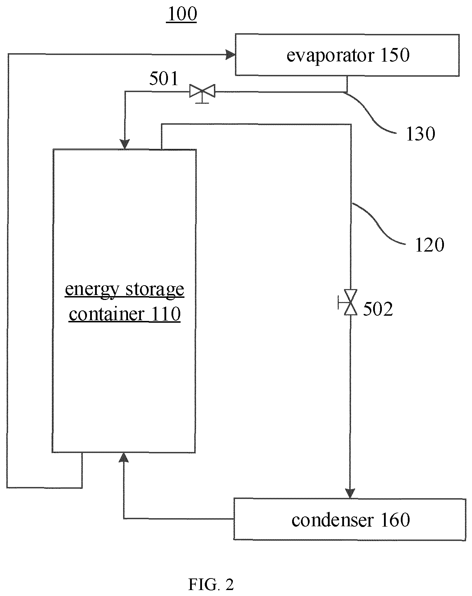

In another embodiment of the present disclosure, referring to FIG. 2, the storage unit 100 includes an energy storage container 110, a condenser 160, an energy storage pressure-maintaining flow path 120, an evaporator 150, and an energy release pressure-maintaining flow path 130. The energy storage container 110 is configured to store carbon dioxide in a gas state and carbon dioxide in a liquid state; the condenser 160 is connected to the energy storage container 110 and is configured to condense the carbon dioxide in the gas state into the carbon dioxide in the liquid state; the energy storage pressure-maintaining flow path 120 forms a closed-loop connection with the energy storage container 110 and the condenser 160, the carbon dioxide in the gas state inside the energy storage container may flow through the energy storage pressure-maintaining flow path into the condenser where the carbon dioxide in the gas state is condensed into the carbon dioxide in the liquid state during an energy storage phase and an interval period between the energy storage phase and an energy release phase of the energy storage system, and then the carbon dioxide in the liquid state flows back to the energy storage container. The pressure of the energy storage container is maintained stable within a design pressure range during the energy storage phase and the interval period between the energy storage phase and the energy release phase; the evaporator 150 is connected to the energy storage container 110 and is configured to evaporate the carbon dioxide in the liquid state into the carbon dioxide in the gas state; the energy release pressure-maintaining flow path 130 forms a closed-loop connection with the energy storage container 110 and the evaporator 150, such that the carbon dioxide in the liquid state inside the energy storage container 110 is capable of being evaporated into the carbon dioxide in the gas state through the evaporator 150 during the energy release phase of the energy storage system and a part of the carbon dioxide in the gas state flows back to the energy storage container, to maintain the pressure of the energy storage container 110 stable within the design pressure range during the energy release phase.

The embodiments of the present disclosure also provide a control method for the storage unit (the storage unit with an energy storage pressure-maintaining flow path 120 and an energy release pressure-maintaining flow path 130), and the control method includes:

the energy storage phase, where the carbon dioxide in the gas state inside the energy storage container 110 flows through the energy storage pressure-maintaining 120 flow path to the condenser 160 where the carbon dioxide in the gas state is condensed into the carbon dioxide in the liquid state, then the carbon dioxide in the liquid state flows back to the energy storage container 110, to maintain the pressure of the energy storage container stable within the design pressure range of the energy storage system during the energy storage phase;
the energy release phase, the carbon dioxide in the liquid state inside the energy storage container 110 flows through the evaporator 150 to generate the carbon dioxide in the gas state, and a part of the carbon dioxide in the gas state flows back to the energy storage container 110 through the energy release pressure-maintaining flow path 130, so as to maintain the pressure of the energy storage container 110 stable within the design pressure range of the energy storage system during the energy release phase.

Furthermore, the control method for the storage unit provided by the embodiments of the present disclosure further includes an interval period between the energy storage phase and the energy release phase. When the pressure in the energy storage container 110 is greater than a design pressure (such as exceeding the design range), the carbon dioxide in the gas state inside the energy storage container 110 flows out through the energy storage pressure-maintaining flow path 120 to the condenser 160, where the carbon dioxide in the gas state is condensed into the carbon dioxide in the liquid state, and the carbon dioxide in the liquid state flows back to the energy storage container 110, so as to maintain the pressure of the energy storage container stable within the design pressure range during the interval period between the energy storage phase and the energy release phase.

In an embodiment, the plurality of energy storage containers are connected in parallel. Each of the plurality of energy storage containers 110 is provided with a gas-phase inflow interface for the carbon dioxide in the gas state to flow into the energy storage container 110. The gas-phase inflow interfaces of the plurality of energy storage containers 110 are connected in parallel to the evaporator 150 through the energy release pressure-maintaining control valves 501. For example, referring to FIG. 6, the storage unit is provided with energy release pressure-maintaining control valves 501 that correspond one-to-one to the energy storage containers 110. The gas-phase inflow interface of the energy storage container 110 is connected to a first end of the corresponding energy release pressure-maintaining control valve 501, and a second end of each energy release pressure-maintaining control valve 501 is connected to an outlet of the evaporator 150.

In an embodiment, the plurality of energy storage containers are connected in parallel. Each of the plurality of energy storage containers 110 is provided with a liquid-phase outflow interface, and the liquid-phase outflow interface is configured for the carbon dioxide in the liquid state to flow out from the energy storage container 110. A liquid-phase outflow control valve 506 is provided on a connection pipeline between the evaporator 150 and the energy storage container 110 and the liquid-phase outflow interfaces of the plurality of energy storage containers 110 are connected in parallel to the evaporator 150 through the liquid-phase outflow control valves 506. For example, referring to FIG. 6, the storage unit is provided with liquid-phase outflow control valves 506 that correspond one-to-one to the energy storage containers 110. The liquid-phase outflow interface of the energy storage container 110 is connected to a first end of the corresponding liquid-phase outflow control valve 506, and a second end of each liquid-phase outflow control valve 506 is connected to an inlet of the evaporator 150.

In an embodiment, referring to FIG. 6, the liquid-phase inflow interface and liquid-phase outflow interface of the energy storage container are the same liquid-phase interface. Of course, the liquid-phase inflow interface and liquid-phase outflow interface of the energy storage container may also be different liquid-phase interfaces.

In an embodiment, referring to FIG. 6, the gas-phase inflow interface and gas-phase outflow interface of the energy storage container are the same gas-phase interface. Of course, the gas-phase inflow interface and gas-phase outflow interface of the energy storage container may also be different gas-phase interfaces.

As follows, further explanations and descriptions are provided for the structure, principles, and effects of the carbon dioxide gas-liquid-phase-change energy storage system with the storage unit 100 provided in the embodiments of the present disclosure, in conjunction with the accompanying drawings.

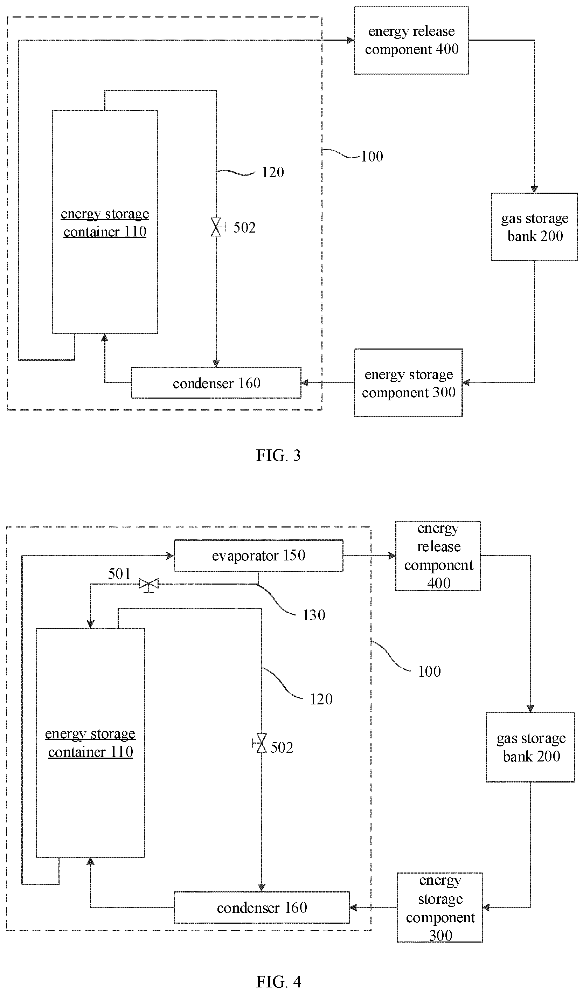

Referring to FIGS. 3 to 4, the carbon dioxide gas-liquid-phase-change energy storage system provided by the embodiments of the present disclosure includes any one of the storage units described in the embodiments of the storage unit above. Since the carbon dioxide gas-liquid-phase-change energy storage system has any one of the storage units described in the embodiments of the storage unit above, it has the same beneficial effects, which will not be repeated here.

In an embodiment of the present disclosure, the carbon dioxide gas-liquid-phase-change energy storage system provided by the embodiments of the present disclosure includes a storage unit 100, an energy storage component 300, an energy release component 400, and a gas storage bank 200. The gas storage bank 200, the energy storage component 300, the storage unit, and the energy release component 400 are sequentially connected in a closed loop.

In some possible embodiments, the gas storage bank 200 is configured to store the carbon dioxide in the gas state, and its internal pressure and temperature may be maintained within a certain range to meet energy storage requirements. For example, the pressure of carbon dioxide in the gas state in the gas storage bank 200 may be close to an ambient pressure, i.e., a surrounding atmospheric pressure. In some embodiments, the temperature inside the gas storage bank 200 ranges from -40 to 70°C (optionally, -40°C, 0°C, 15°C, 20°C, 25°C, 30°C, 35°C, 40°C, 50°C, 60°C, 70°C), and a gas pressure difference between a gas pressure inside the gas storage bank 200 and an external atmospheric pressure is less than 1000 Pa.

In another possible embodiment, the gas storage bank 200 may be provided with an insulation component to keep the temperature of the gas storage bank 200, so as to maintain an internal temperature of the gas storage bank within a required range.

In another possible embodiment, the gas storage bank 200 adopts an air-membrane gas storage bank whose volume may vary. When the carbon dioxide is added, a volume of the gas storage bank 200 increases, and when the carbon dioxide is released, the volume of the gas storage bank 200 decreases, thereby maintaining a constant pressure inside the gas storage bank 200. It should be noted that the pressure and temperature inside the gas storage bank 200 are maintained within a certain range, and in the above analysis, the pressure and temperature inside the gas storage bank 200 may be approximately regarded as constant values.

It may be understood that in other embodiments of the present disclosure, the gas storage bank 200 may also use other variable-volume containers.

In some possible embodiments, the energy storage component is configured to store energy. For example, during operation, the energy storage component may compress the carbon dioxide in the gas state in the gas storage bank to store it in the storage unit.

In some possible embodiments, the energy release component is configured to release energy. For example, the carbon dioxide coming from the storage unit 100 expands to generate electricity via the energy release component, and the expanded carbon dioxide in the gas state is stored in the gas storage bank 200.

In an embodiment, referring to FIG. 3, the storage unit 100 includes an energy storage container 110, a condenser 160, and an energy storage pressure-maintaining flow path 120. The energy storage container 110 is configured to store the carbon dioxide in the gas state and the carbon dioxide in the liquid state; the condenser 160 is connected to the energy storage container 110 and the energy storage component 300, and is configured to condense the carbon dioxide in the gas state into the carbon dioxide in the liquid state; the energy storage pressure-maintaining flow path 120 forms a closed-loop connection with the energy storage container 110 and the condenser 160.

The carbon dioxide in the gas state inside the energy storage container 110 may flow into the condenser 160 through the energy storage pressure-maintaining flow path 120 during the energy storage phase and the interval period between the energy storage phase and the energy release phase, and be condensed into the carbon dioxide in the liquid state before flowing back to the energy storage container 110, so as to maintain the pressure of the energy storage container 110 stable within the design pressure range during the energy storage phase and the interval period between the energy storage phase and the energy release phase.

For example, the outlet of the condenser 160 is connected to the liquid-phase inflow interface of the energy storage container 110; the energy storage pressure-maintaining flow path 120 is capable of flowing the carbon dioxide in the gas state initially stored in the energy storage container 110 (as a pressure-maintaining medium to maintain the stable pressure inside the energy storage container) out to the inlet of the condenser 160, such that the carbon dioxide in the gas state is condensed and flows into the energy storage container 110.

For example, the liquid-phase outflow interface of the energy storage container 110 is connected to the inlet of the energy release component 400, the outlet of the energy release component 400 is connected to the inlet of the energy release component 400, and the outlet of the energy release component 400 is connected to the inlet of the gas storage bank 200; the outlet of the gas storage bank 200 is connected to the inlet of the energy storage component 300, the outlet of the energy storage component 300 is connected to the inlet of the condenser 160, and the outlet of the condenser 160 is connected to the liquid-phase inflow interface of the energy storage container 110.

The workflow of the carbon dioxide gas-liquid-phase-change energy storage system includes:

during the energy release phase, the carbon dioxide in the liquid state in the energy storage container 110 may flow into the energy release component 400 to operate, enabling the expansion of carbon dioxide to generate electricity, and the expanded carbon dioxide in the gas state may be stored in the gas storage bank 200.

during the energy storage phase, the energy storage component 300 may operate to compress the carbon dioxide in the gas state in the gas storage bank 200, which is then condensed into the carbon dioxide in the liquid state through the condenser 160 and flows into the energy storage container 110 for storage, the carbon dioxide in the gas state initially stored inside the energy storage container flows out through the energy storage pressure-maintaining flow path 120 to the condenser, where it is condensed into the carbon dioxide in the liquid state, and then flows back to the energy storage container, so as to maintain the pressure of the energy storage container stable within the design pressure range during the energy storage phase.

In this way, the carbon dioxide gas-liquid-phase-change energy storage system of the present disclosure may release energy to generate electricity during a peak electricity demand period (enabling the energy release component 400 to operate), and facilitate energy storage using surplus electricity during an off-peak period (enabling the energy storage component 300 to operate), achieving the effect of peak shifting and valley filling.

During the energy storage phase, the carbon dioxide in the gas state (such as the carbon dioxide in the gas state at normal temperature and normal pressure) in the gas storage bank 200 enters the condenser 160 after passing through the energy storage component 300 and is condensed into the carbon dioxide in the liquid state, the carbon dioxide in the liquid state enters the energy storage container 110 for storage, and the carbon dioxide in the gas state (i.e., pressure-maintaining carbon dioxide) initially stored in the energy storage container 110 within the design pressure range of the energy storage system, together with the carbon dioxide in the gas state coming from the energy storage component 300 within the design pressure range, enters the condenser 160 through the energy storage pressure-maintaining flow path 120 to be condensed into the carbon dioxide in the liquid state before flowing into the energy storage container 110. In this way, as the carbon dioxide in the liquid state gradually flows into the energy storage container 110, the carbon dioxide in the gas state within the design pressure range initially stored in the energy storage container 110 gradually flows out of the energy storage container 110, which not only ensures that the pressure in the energy storage container 110 remains stable within the design pressure range during the energy storage phase, avoiding a continuous increase in pressure in the energy storage container 110 as the carbon dioxide in the liquid state gradually flows in, which could lead to variable operating conditions of the energy storage component 300 and thereby affect the safety of the energy storage system, but also enables the carbon dioxide in the gas state initially stored in the energy storage container 110 within the design pressure range to flow through the energy storage pressure-maintaining flow path 120 into the condenser 160, where it is condensed into the carbon dioxide in the liquid state and then flows into the energy storage container 110, further increasing the mass of the carbon dioxide in the liquid state stored in the energy storage container 110, thereby improving the energy release efficiency of the energy storage system.

Furthermore, during the interval period between the energy storage phase and the energy release phase, when the external ambient temperature rises, the carbon dioxide in the liquid state inside the energy storage container 110 absorbs heat and evaporates into the carbon dioxide in the gas state, causing the pressure inside the energy storage container 110 to increase; at least a part of the carbon dioxide in the gas state inside the energy storage container 110 enters the condenser 160 through the energy storage pressure-maintaining flow path 120 for condensation, thereby reducing the pressure in the energy storage container 110 to the design pressure range and improving the safety of the energy storage system. Furthermore, by controlling the opening and closing of the energy storage pressure-maintaining flow path 120, the pressure in the energy storage container 110 may be maintained at an energy storage pressure, so as to reduce the pressure fluctuation in the energy storage container 110. Of course, the pressure in the energy storage container 110 may also be maintained within a preset range, such as between a first preset pressure and a second preset pressure, by controlling the opening and closing of the energy storage pressure-maintaining flow path 120. For example, when the pressure in the energy storage container 110 is greater than the first preset pressure, the energy storage pressure-maintaining flow path 120 is opened and remains open until the pressure in the energy storage container 110 drops to the second preset pressure; when the pressure in the energy storage container 110 drops below the second preset pressure, the energy storage pressure-maintaining flow path 120 is closed and remains closed until the pressure in the energy storage container 110 rises to the first preset pressure and opens.

In some embodiments of the present disclosure, after determining the pressure of the energy storage system, a mass flow rate $\dot{m}_{pressure\text{-}maintaining}$ of the carbon dioxide in the gas state initially stored in the energy storage container 110 and flowing out of the energy storage container 110, and a mass flow rate $\dot{m}_{operate}$ of the carbon dioxide in the gas state flowing out of the energy storage component 300 should satisfy the                                formula:

$$\dot{m}_{\text{pressure}-\text{maintaining}} \geq \dot{m}_{\text{operate}} * \frac{R_g}{R_l - R_g}.$$

Where $R_g$ represents a gaseous carbon dioxide density under the energy storage pressure, and $R_l$ represents a liquid carbon dioxide density under the energy storage pressure.

When the energy storage system distributes the carbon dioxide in the gas state according to the above formula, it may ensure that a volume of the carbon dioxide in the gas state flowing out of the energy storage container 110 is not less than a volume of carbon dioxide in the liquid state flowing into the energy storage container 110, thereby ensuring that the pressure in the energy storage container 110 does not increase as the carbon dioxide in the liquid state flows into the energy storage container 110.

In this way, the control method for the carbon dioxide gas-liquid-phase-change energy storage system provided by the embodiment may include:

during the energy storage phase, the energy storage component 300 is operated to compress the carbon dioxide in the gas state in the gas storage bank 200 for energy storage, and the carbon dioxide in the gas state compressed by the energy storage component 300 is condensed into carbon dioxide in the liquid state through the condenser 160 and then flows into the energy storage container 110. Thus, the the energy storage pressure-maintaining flow path 120 is opened, such that the carbon dioxide in the gas state within the design pressure range of the energy storage container 110 and the carbon dioxide in the gas state within the design pressure range coming from the energy storage component 300 flow together to the condenser 160 and are condensed into the carbon dioxide in the liquid state before flowing into the energy storage container 110;

during the interval period between the energy storage phase and the energy release phase, when the pressure in the energy storage container 110 is greater than the first preset pressure, the energy storage pressure-maintaining flow path 120 is opened, such that the carbon dioxide in the gas state inside the energy storage container 110 flows into the condenser 160 and is condensed into the carbon dioxide in the liquid state before flowing into the energy storage container 110.

In an embodiment, referring to FIG. 3, the energy storage pressure-maintaining flow path 120 is provided with the energy storage pressure-maintaining control valve 502; an inlet end of the energy storage pressure-maintaining flow path 120 is connected to the gas-phase outflow interface of the energy storage container 110, and an outlet end of the energy storage pressure-maintaining flow path 120 is connected to an inlet of the condenser 160. In this way, the opening or closing of the energy storage pressure-maintaining control valve 502 may be controlled, thereby controlling the opening or closing of the energy storage pressure-maintaining flow path 120.

In an embodiment, a liquid pump may be provided between the liquid-phase inflow interface of the energy storage container 110 and an outlet of the condenser 160, so as to pump the carbon dioxide in the liquid state flowing out of the condenser 160 into the energy storage container 110.

In an embodiment, referring to FIG. 6, a liquid-phase inflow control valve 505 may also be provided between the liquid-phase inflow interface of the energy storage container 110 and the outlet of the condenser 160. In this way, by controlling the opening or closing of the liquid-phase inflow control valve 505, it is possible to control whether the liquid-phase inflow interface of the energy storage container 110 is in communication with the outlet of the condenser 160. When the liquid-phase inflow control valve 505 is closed, the carbon dioxide in the liquid state in the energy storage container 110 cannot flow out through the liquid-phase inflow interface, which facilitates the closure of the energy storage container 110.

In the embodiment of the present disclosure, the condenser 160 is provided with a thermal channel and a cooling channel; the inlet of the condenser 160 is an inlet of the thermal channel of the condenser 160, and the outlet of the condenser 160 is an outlet of the thermal channel of the condenser 160. The cooling channel of condenser 160 includes a cooling medium, such as cooling water or cold air; when the carbon dioxide in the gas state flows through the thermal channel of the condenser 160, the carbon dioxide in the gas state may be condensed into the carbon dioxide in the liquid state.

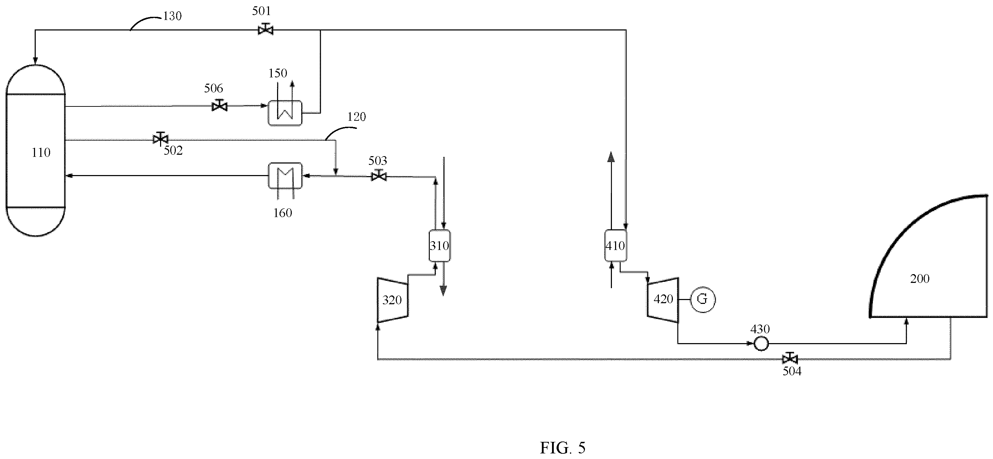

In an embodiment of the present disclosure, the condenser 160 may be provided with one thermal channel, i.e., the condenser 160 may have one inlet. In this way, the outlet of the energy storage pressure-maintaining flow path 120 and the outlet of the energy storage component 300 may both be connected to the inlet of the thermal channel of the condenser 160. Furthermore, referring to FIG. 5, a first control valve 503 is provided between the energy storage component 300 and the inlet of the condenser 160, and the outlet of the energy storage pressure-maintaining flow path 120 is connected between the first control valve 503 and the inlet of the condenser 160. In this way, during the interval period between the energy storage phase and the energy release phase, the first control valve 503 may be closed, causing the energy storage pressure-maintaining flow path 120, the condenser 160, and the energy storage container 110 to form a closed pressure-maintaining loop.

In another embodiment of the present disclosure, the condenser 160 may be provided with a first thermal channel and a second thermal channel, an inlet of the first thermal channel is connected to the outlet of the energy storage component 300, and an inlet of the second thermal channel is connected to the outlet of the energy storage pressure-maintaining flow path 120; an outlet of the first thermal channel and an outlet of the second thermal channel are connected to the liquid-phase inflow interface of the energy storage container 110, for example, the outlet of the first thermal channel and the outlet of the second thermal channel are connected to serve as the outlet of the condenser 160. It may be understood that the carbon dioxide in the gas state coming from the energy storage component 300 is condensed into the carbon dioxide in the liquid state and stored in the energy storage container 110 when it flows through the first thermal channel of the condenser 160, and the carbon dioxide in the gas state flowing through the energy storage pressure-maintaining flow path 120 is condensed into carbon dioxide in the liquid state and stored in the energy storage container 110 when it flows through the second thermal channel of the condenser 160.

In another embodiment of the present disclosure, the condenser 160 may include a first condenser and a second condenser, the first condenser is provided with a first thermal channel, and the second condenser is provided with a second thermal channel, an inlet of the first thermal channel is connected to the outlet of the energy storage component 300, and an inlet of the second thermal channel is connected to the outlet of the energy storage pressure-maintaining flow path 120. The outlet of the first thermal channel and the outlet of the second thermal channel are connected to the liquid-phase inflow interface of the energy storage container 110, for example, the outlet of the first thermal channel and the outlet of the second thermal channel are connected to serve as the outlet of the condenser 160. It may be understood that the carbon dioxide in the gas state coming from the energy storage component 300 is condensed into the carbon dioxide in the liquid state when it flows through the first condenser and stored in the energy storage container 110, and the carbon dioxide in the gas state flowing through the energy storage pressure-maintaining flow path 120 is condensed into the carbon dioxide in the liquid state when it flows through the first condenser and stored in the energy storage container 110.

In an embodiment of the present disclosure, the storage unit further includes an evaporator 150 connected to the energy storage container 110 and the energy release component 400, and the evaporator is configured to evaporate the carbon dioxide in the liquid state into the carbon dioxide in the gas state.

during the energy release phase, the carbon dioxide in the liquid state in the energy storage container 110 may flow into the evaporator 150, where it is heated and evaporated to form the carbon dioxide in the gas state; the energy release component 400 operates to expand the carbon dioxide in the gas state to generate electricity, and the expanded carbon dioxide in the gas state is stored in the gas storage bank 200.

In an embodiment of the present disclosure, referring to FIG. 4, the storage unit 100 further includes an energy release pressure-maintaining flow path 130, which forms a closed-loop connection with the energy storage container 110 and the evaporator 150, such that the carbon dioxide in the liquid state in the energy storage container 110 may be evaporated into carbon dioxide in the gas state through the evaporator 150 during the energy release phase of the energy storage system, and partially flow back to the energy storage container 110, maintaining the pressure of the energy storage container 110 stable within the design pressure range during the energy release phase. For example, the inlet of the evaporator 150 is connected to the liquid-phase outflow interface of the energy storage container 110, such that the carbon dioxide in the liquid state flowing out of the energy storage container 110 may be converted into the carbon dioxide in the gas state; the energy release pressure-maintaining flow path 130 may enables a part of the carbon dioxide in the gas state generated by the evaporator 150 to flow back to the energy storage container 110.

During the energy release phase, the carbon dioxide in the liquid state in the energy storage container 110 flows into the evaporator 150 for evaporation, a part of the carbon dioxide in the gas state evaporated by the evaporator 150 flows back to the energy storage container 110 through the energy release pressure-maintaining flow path 130, so as to compensate for the pressure drop of the energy storage container 110 caused by the outflow of the carbon dioxide in the liquid state and maintain the pressure in the energy storage container 110 basically unchanged; the other part of the carbon dioxide in the gas state is used by the energy release component 400 to perform work and generate electricity. In this way, the pressure in the energy storage container 110 may be maintained stable during the energy release process, thereby enabling the energy release component 400 to operate under a rated condition, which is conducive to improving the energy storage efficiency and ensuring the safe and stable operation of the energy storage system.

In this embodiment, the control method for the carbon dioxide gas-liquid-phase-change energy storage system may include:

during the energy release phase, the carbon dioxide in the liquid state inside the energy storage container 110 flows into the evaporator 150 and is converted into the carbon dioxide in the gas state, and the energy release component 400 operates to utilize the carbon dioxide in the gas state generated by the evaporator 150 for expansion power generation, and the expanded carbon dioxide in the gas state is stored in the gas storage bank 200; the energy release pressure-maintaining flow path 130 is opened, such that a part of the carbon dioxide in the gas state generated by the evaporator 150 flows back into the energy storage container 110.

In an embodiment of the present disclosure, referring to FIGS. 3 and 4, the energy release pressure-maintaining flow path 130 is provided with the energy release pressure-maintaining control valve 501; the inlet end of the energy release pressure-maintaining flow path 130 is connected to the outlet of the evaporator 150, and the outlet of the energy release pressure-maintaining flow path 130 is connected to the gas-phase inflow interface of the energy storage container 110. In this way, the opening or closing of the energy release pressure-maintaining control valve 501 may be controlled, thereby controlling the opening or closing of the energy release pressure-maintaining flow path 130.

In an embodiment, a flow rate of the carbon dioxide in the gas state inside the energy release pressure-maintaining flow path 130 may be controlled through the energy release pressure-maintaining control valve 501, thereby adjusting a ratio of the carbon dioxide in the liquid state flowing out of the energy storage container 110 and the carbon dioxide in the gas state flowing into the energy storage container 110, for example, the two may be kept approximately equal. This ensures that the pressure in the energy storage container 110 remains essentially within the design pressure range of the energy storage, avoiding instability in the operating conditions of the energy release component 400 caused by a pressure drop in the energy storage container 110 due to the outflow of the carbon dioxide in the liquid state, which is conducive to improving the energy storage efficiency and ensuring the safe and stable operation of the energy storage system

In an embodiment, after determining the energy storage pressure of the energy storage system, a mass flow rate $\dot{m}_{\text{pressure-maintaining}}$ of the refluxed carbon dioxide in the gas state (i.e., a mass flow rate of the carbon dioxide in the gas state flowing from the evaporator 150 to the energy release pressure-maintaining flow path 130) and a mass flow rate $\dot{m}_{\text{operate}}$ of the released carbon dioxide (i.e., a mass flow rate of the carbon dioxide in the gas state flowing from the evaporator 150 to the energy release component 400) satisfy the following formula:

$$\dot{m}_{\text{ pressure-maintaining}} \geq \dot{m}_{\text{ operate}} * \frac{R_g}{R_l - R_g}$$

Where $R_g$ represents a gaseous carbon dioxide density under the energy storage pressure, and $R_l$ represents a liquid carbon dioxide density under the energy storage pressure.

When the evaporator 150 distributes the carbon dioxide in the gas state according to the above formula, it may ensure that a volume of the carbon dioxide in the liquid state flowing out of the energy storage container 110 is not greater than a volume of carbon dioxide in the gas state flowing into the energy storage container 110, thereby ensuring that the pressure in the energy storage container 110 does not decrease with the outflow of the carbon dioxide in the liquid state from the energy storage container 110.

In an embodiment, referring to FIG. 5, a liquid-phase outflow control valve 506 is provided between the liquid-phase outflow interface of the energy storage container 110 and the inlet of the evaporator 150. In this way, it allows the control of whether the carbon dioxide in the liquid state flows into the evaporator 150 by controlling the opening and closing of the liquid-phase outflow control valve 506.

In an embodiment, referring to FIG. 6, a liquid carbon dioxide booster pump 140 is provided between the liquid-phase outflow interface of the energy storage container 110 and the inlet of the evaporator 150; during the energy release phase, the liquid carbon dioxide booster pump 140 may operate to pump the carbon dioxide in the liquid state in the energy storage container 110 into the evaporator 150.

In the embodiment of the present disclosure, the evaporator 150 may be provided with a heating channel and an evaporation channel, an inlet of the evaporation channel of the evaporator 150 is the inlet of the evaporator 150, and an outlet of the evaporation channel of the evaporator 150 is the outlet of the evaporator 150. A heating medium in the heating channel (such as water or air with a certain temperature) may provide heat to the carbon dioxide in the liquid state in the evaporation channel, causing the carbon dioxide in the liquid state to evaporate into the carbon dioxide in the gas state in the evaporation channel.

In an embodiment, the evaporator 150 is provided with a first evaporation channel and a second evaporation channel, an outlet of the first evaporation channel is connected to the inlet of the energy release component 400, and an outlet of the second evaporation channel is connected to the inlet of the energy release pressure-maintaining flow path 130. The inlets of the first and second evaporation channels are connected to the liquid-phase outflow interface of the energy storage container 110, for example, the inlet of the first evaporation channel and the inlet of the second evaporation channel are connected to serve as the inlet of the evaporator 150. It may be understood that the carbon dioxide in the gas state generated by the carbon dioxide in the liquid state through the second evaporation channel flows back to the energy storage container 110 through the energy release pressure-maintaining flow path 130.

In an embodiment, evaporator 150 may include a first evaporator and a second evaporator, with the first evaporator having a first evaporation channel and the second evaporator having a second evaporation channel, an outlet of the first evaporation channel is connected to the inlet of the energy release component 400, and an outlet of the second evaporation channel is connected to the inlet of the energy release pressure-maintaining flow path 130. The inlets of the first and second evaporation channels are connected to the liquid-phase outflow interface of the energy storage container 110, for example, the inlet of the first evaporation channel and the inlet of the second evaporation channel are connected to serve as the inlet of the evaporator 150. It may be understood that the carbon dioxide in the gas state generated by the carbon dioxide in the liquid state through the second evaporator flows back to the energy storage container 110 through the energy release pressure-maintaining flow path 130. Furthermore, a valve may be provided at the inlet of the first evaporation channel and the inlet of the second evaporation channel to control the flow rate of the carbon dioxide in the liquid state entering the first evaporator and the second evaporator, thereby adjusting the ratio of the carbon dioxide in the liquid state flowing out of the energy storage container 110 to the carbon dioxide in the gas state flowing in the energy storage container 110, for example, the two may be kept approximately equal, ensuring that the pressure inside the energy storage container 110 remains essentially within the design pressure range of the energy storage.

In an embodiment of the present disclosure, the energy storage container 110 is a liquid storage tank, for example, used to store the carbon dioxide in the liquid state during the energy storage phase. It may be understood that the liquid storage tank may also initially store the carbon dioxide in the gas state for pressure stabilization, such as the carbon dioxide in the gas state within the design pressure range.

In some possible embodiments, the pressure of the carbon dioxide in the gas state and the carbon dioxide in the liquid state stored in the energy storage container 110 is between 2MPa-10MPa, for example, values include 2MPa, 5MPa, 6MPa, 7MPa, 7.2MPa, 7.5MPa, 8MPa, 10MPa.

Optionally, the carbon dioxide in the liquid state in the liquid storage tank may not exceed 50°C, especially not exceeding 30°C, such as between 20°C and 30°C. For example, when the carbon dioxide in the liquid state flows into the gas storage bank, the temperature is between 20°C and 30°C, such that the temperature of the carbon dioxide in the liquid state in the liquid storage tank does not exceed 30°C.

For example, the temperature of the carbon dioxide in the liquid state in the liquid storage tank is between 20°C and 30°C, and the pressure is between 7MPa-7.5MPa. This may prevent safety risks caused by unexpected temperature increases or pressure rises in the liquid storage tank, and thus the carbon dioxide energy storage system of the present disclosure is more suitable for deployment in densely populated places such as residential areas, schools, hospitals, stations, and commercial centers.

In an embodiment of the present disclosure, the volume of the energy storage container 110 may be increased proportionally to allow for the storage or maintenance of the carbon dioxide in the gas state inside the energy storage container 110, so as to use the carbon dioxide in the gas state inside the energy storage container 110 as a pressure-maintaining working medium to maintain stable pressure inside the energy storage container 110. For example, in an embodiment of the present disclosure, during the interval period between the energy storage phase and the energy release phase, the carbon dioxide in the energy storage container 110 may be partially in liquid form and partially in gaseous form, rather than entirely in liquid form. By utilizing the energy storage pressure-maintaining flow path 120 to continuously condense the carbon dioxide in the gas state, the amount and volume of carbon dioxide in the gas state inside the energy storage container 110 are minimized as much as possible, which not only maintains the pressure of the energy storage container 110 at the energy storage pressure, but also increases the mass of the working carbon dioxide in the liquid state, thereby improving the energy release efficiency of the energy storage system.

In some possible embodiments, there are a plurality of energy storage containers 110 of the storage unit, and these energy storage containers 110 may be connected in series, in parallel, or through a combination of series and parallel connections.

In an embodiment, there are a plurality of energy storage containers 110 connected in series, to increase the volume of energy storage containers 110.

In an embodiment, the plurality of energy storage containers 110 are connected in parallel, to increase the volume of energy storage container 110. Each of the plurality of energy storage containers 110 is provided with a gas-phase inflow interface for the carbon dioxide in the gas state to flow into the energy storage container 110. The gas-phase inflow interfaces of the plurality of energy storage containers 110 are connected in parallel to the evaporator 150 through the energy release pressure-maintaining control valves 501. For example, referring to FIG. 6, the storage unit is provided with energy release pressure-maintaining control valves 501 that correspond one-to-one to the energy storage containers 110. The gas-phase inflow interface of the energy storage container 110 is connected to a first end of the corresponding energy release pressure-maintaining control valve 501, and a second end of each energy release pressure-maintaining control valve 501 is connected to an outlet of the evaporator 150.

In an embodiment, the plurality of energy storage containers are connected in parallel. Each of the plurality of energy storage containers 110 is provided with a liquid-phase outflow interface, and the liquid-phase outflow interface is configured for the carbon dioxide in the liquid state to flow out from the energy storage container 110. A liquid-phase outflow control valve 506 is provided on a connection pipeline between the evaporator 150 and the energy storage container 110, and the liquid-phase outflow interfaces of the plurality of energy storage containers 110 are connected in parallel to the evaporator 150 through the liquid-phase outflow control valves 506. For example, referring to FIG. 6, the storage unit is provided with liquid-phase outflow control valves 506 that correspond one-to-one to the energy storage containers 110. The liquid-phase outflow interface of the energy storage container 110 is connected to a first end of the corresponding liquid-phase outflow control valve 506, and a second end of each liquid-phase outflow control valve 506 is connected to an inlet of the evaporator 150.

In an embodiment of the present disclosure, referring to FIG. 6, there are the plurality of energy storage containers 110 in the storage unit; the same interfaces of the energy storage container 110 are connected in parallel via corresponding valve sets; in any one of the valve sets, one end of each valve is connected to each other, and the other end of each valve is respectively connected to the interface of the corresponding energy storage container 110. In this way, the plurality of storage units may be connected in parallel via the valve sets, and thus the amount of carbon dioxide in the liquid state that may be stored in the carbon dioxide gas-liquid-phase-change energy storage system may be increased, thereby enhancing the energy storage capacity of the carbon dioxide gas-liquid-phase-change energy storage system. Furthermore, when one or a plurality of energy storage containers 110 need maintenance, the valve corresponding to the to-be-maintained energy storage container 110 may be closed, thereby isolating the to-be-maintained energy storage container 110 from other working energy storage containers 110. In this way, when the to-be-maintained energy storage container 110 is under maintenance, other energy storage containers 110 may continue to operate, which improves the maintenance convenience of the energy storage container 110.

In an embodiment, referring to FIG. 6, the liquid-phase inflow interface and liquid-phase outflow interface of the energy storage container 110 are the same liquid carbon dioxide interface, and the gas-phase inflow interface and gas-phase outflow interface of the energy storage container 110 are the same gaseous carbon dioxide interface.

The valve set includes an energy storage pressure-maintaining control valve set, an energy release pressure-maintaining control valve set, a liquid-phase inflow control valve set, and a liquid-phase outflow control valve set.

The energy storage pressure-maintaining control valve set includes energy storage pressure-maintaining control valves 502 that correspond one-to-one to the energy storage containers 110, one end of each energy storage pressure-maintaining control valve 502 is connected to the gas-phase interface of the corresponding energy storage container 110, and the other end of each energy storage pressure-maintaining control valve 502 is connected to the inlet of the condenser 160.

The energy release pressure-maintaining control valve set includes energy release pressure-maintaining control valves 501 that correspond one-to-one to the energy storage containers 110. One end of each energy release pressure-maintaining control valve 501 is connected to the gas-phase interface of the corresponding energy storage container 110, and the other end of each energy release pressure-maintaining control valve 501 is connected to the outlet of the evaporator 150.

The liquid-phase inflow control valve set includes liquid-phase inflow control valves 505 that correspond one-to-one to the energy storage containers 110. One end of each liquid-phase inflow control valve 505 is connected to the corresponding liquid-phase interface of the energy storage container 110, and the other end of each liquid-phase inflow control valve 505 is connected to the outlet of the condenser 160.

The liquid-phase outflow control valve set includes liquid-phase outflow control valves 506 that correspond one-to-one to the energy storage containers 110. One end of each liquid-phase outflow control valve 506 is connected to the corresponding liquid-phase interface of the energy storage container 110, and the other end of each liquid-phase outflow control valve 506 is connected to the inlet of the evaporator 150.

**Of** course, the liquid-phase inflow interface and liquid-phase outflow interface of the energy storage container 110 may not be the same interface, and the gas-phase inflow interface and gas-phase outflow interface of the energy storage container 110 may not be the same interface.

In an embodiment of the present disclosure, the energy storage component 300 includes at least one compression energy storage portion; each compression energy storage portion is connected in series between the gas storage bank 200 and the condenser 160 through a pipeline; the compression energy storage portion includes a compressor 320 and an energy storage heat exchanger 310, with the outlet of the compressor 320 connected to the inlet of the thermal channel of the energy storage heat exchanger 310.

For example, in FIG. 5, the energy storage component 300 includes one compression energy storage portion, and the energy storage component 300 includes one compressor 320 and one energy storage heat exchanger 310. The inlet of the compressor 320 is connected to the outlet of the gas storage bank 200, the outlet of the compressor 320 is connected to the inlet of the thermal channel of the energy storage heat exchanger 310, and the outlet of thermal channel of energy storage heat exchanger 310 is connected to the inlet of condenser 160. During the energy storage phase, the compressor 320 may compress the carbon dioxide in the gas state in the gas storage bank 200 for energy storage; the compressed carbon dioxide in the gas state flows through the thermal channel of the energy storage heat exchanger 310, and then exchanges heat with the heat exchange medium in the cooling channel of the energy storage heat exchanger 310 to reduce its temperature.

For example, in FIG. 6, the energy storage component 300 includes a plurality of compression energy storage portions cascaded in sequence. A compressor 320 of a first-stage compression energy storage portion is provided with an inlet connected to the outlet of the gas storage bank 200, and an outlet of a thermal channel of an energy storage heat exchanger 310 of a last-stage compression energy storage portion is connected to the inlet of the condenser 160. In adjacent two compression energy storage portions, an outlet of a thermal channel of an energy storage heat exchanger 310 of a preceding-stage compression energy storage portion is connected to an inlet of a compressor 320 of a subsequent-stage compression energy storage portion. Here, the first stage, last stage, preceding stage, and subsequent stage are defined in a direction from the gas storage bank 200 through the energy storage component 300 to the energy storage container 110.

In an embodiment of the present disclosure, referring to FIG. 6, a second control valve 504 may also be provided between the energy storage component 300 and the gas storage bank 200. In this way, by controlling the opening or closing of the second control valve 504, it is possible to control whether the gas storage bank 200 and the energy storage component 300 are communicated. In an embodiment, during the energy release phase, the second control valve 504 may be closed to allow the gas storage bank 200 to store the carbon dioxide in the gas state.

In an embodiment of the present disclosure, the energy release component 400 includes at least one expansion energy release portion; each expansion energy release portion is connected in series between the evaporator 150 and the gas storage bank 200 through a pipeline; the expansion energy release portion includes an expander 420 and an energy release heat exchanger 410, with an inlet of the expander 420 connected to an outlet of a cooling channel of the energy release heat exchanger 410.

For example, in FIG. 5, the energy release component 400 includes one expansion energy release portion, and the energy release component 400 includes one expander 420 and one energy release heat exchanger 410; the inlet of the cooling channel of the energy release heat exchanger 410 is connected to the outlet of the evaporator 150, the inlet of the expander 420 is connected to the outlet of the cooling channel of the energy release heat exchanger 410, and the outlet of the expander 420 is connected to the inlet of the gas storage bank 200. During the energy release phase, the carbon dioxide in the gas state flowing through the cooling channel of the energy release heat exchanger 410 may be heated by the heat exchange medium in the thermal channel of the energy release heat exchanger 410; the heated carbon dioxide in the gas state flows into the expander 420 to expand and drive the turbine of the expander 420 to rotate, thereby driving the generator of the expander 420 to generate electricity. It may be understood that if the storage unit only includes the energy storage container 110, the condenser 160, and the energy storage pressure-maintaining flow path 120, and does not include the evaporator 150, the carbon dioxide in the liquid state flowing out of the energy storage container 110 flows through the thermal channel of the energy release heat exchanger 410, and may exchange heat with the heat exchange medium of the cooling channel in the energy storage heat exchanger 310, to absorb heat and evaporate into the carbon dioxide in the gas state and increase in temperature.

For example, in FIG. 6, the energy release component 400 includes a plurality of expansion energy release portions cascaded in sequence. An inlet of a cooling channel of an energy release heat exchanger 410 of a first-stage expansion energy release portion is connected to the outlet of the evaporator 150, and an outlet of an expander 420 of a last-stage expansion energy release portion is connected to the inlet of the gas storage bank 200. In adjacent two expansion energy release portions, an outlet of an expander 420 of a preceding-stage expansion energy release portion is connected to an inlet of a cooling channel of an energy release heat exchanger 410 of a subsequent-stage expansion energy release portion. Here, the first stage, last stage, preceding stage, and subsequent stage are defined in a direction from the energy storage container 110 through the energy release component 400 to the gas storage bank 200.

In an embodiment, referring to FIG. 6, an energy release cooler 430 is also provided between the energy release component 400 and the gas storage bank 200. The carbon dioxide in the gas state flowing out of the energy release component 400 is further cooled to ambient temperature and pressure as it passes through the energy release cooler 430, and then stored in the gas storage bank 200. In this way, the carbon dioxide in the gas state emitted from the energy release component 400 may be cooled and stored in the gas storage bank 200.

It should be noted that, although, in the accompanying drawings, the steps of the control method for the storage unit of the carbon dioxide gas-liquid-phase-change energy storage system in the present disclosure are described in a specific order, this does not require or imply that these steps must be executed in the specific order or that all steps shown must be executed to achieve the desired result. Additionally or alternatively, certain steps may be omitted, multiple steps may be combined into one step, and/or one step may be divided into multiple steps for execution.

Those skilled in the art, upon considering the specification and practicing the invention disclosed herein, will readily conceive of other embodiments of the present invention. The present disclosure is intended to cover any modifications, applications, or adaptive changes of the present disclosure that adhere to its general principles and include known knowledge or customary technical means in the art not explicitly disclosed by the present disclosure. The specification and examples are to be regarded as exemplary only, and the true scope and spirit of the present disclosure are indicated by the appended claims.

## Claims

1. A storage unit of a carbon dioxide gas-liquid-phase-change energy storage system, comprising:

an energy storage container, configured to store carbon dioxide in a gas state and carbon dioxide in a liquid state;
a condenser, connected to the energy storage container and configured to condense the carbon dioxide in the gas state into the carbon dioxide in the liquid state;
an energy storage pressure-maintaining flow path, wherein the energy storage pressure-maintaining flow path, the energy storage container and the condenser form a closed-loop connection;
wherein during an energy storage phase and an interval period between the energy storage phase and an energy release phase of the energy storage system, the carbon dioxide in the gas state inside the energy storage container is capable of flowing through the energy storage pressure-maintaining flow path to the condenser where the carbon dioxide in the gas state is condensed into the carbon dioxide in the liquid state, and then the carbon dioxide in the liquid state flows back to the energy storage container, to maintain a pressure of the energy storage container stable within a design pressure range of the energy storage system during the energy storage phase and the interval period between the energy storage phase and the energy release phase.

2. The storage unit of the carbon dioxide gas-liquid-phase-change energy storage system according to claim 1, wherein an energy storage pressure-maintaining control valve configured to control opening and closing of the flow path is provided on the energy storage pressure-maintaining flow path.

3. The storage unit of the carbon dioxide gas-liquid-phase-change energy storage system according to claim 1, wherein there are a plurality of energy storage containers, and the plurality of energy storage containers are connected in series.

4. The storage unit of the carbon dioxide gas-liquid-phase-change energy storage system according to claim 1, wherein there are a plurality of energy storage containers, and the plurality of energy storage containers are connected in parallel.

5. The storage unit of the carbon dioxide gas-liquid-phase-change energy storage system according to claim 4, wherein each of the plurality of energy storage containers is provided with a gas-phase outflow interface for the carbon dioxide in the gas state to flow out from the energy storage container; the gas-phase outflow interfaces of the plurality of energy storage containers are connected in parallel to the condenser through the energy storage pressure-maintaining control valves.

6. The storage unit of the carbon dioxide gas-liquid-phase-change energy storage system according to claim 5, wherein each of the plurality of energy storage containers is provided with a liquid-phase inflow interface for the carbon dioxide in the liquid state to flow into the energy storage container, a liquid-phase inflow control valve is provided on a connection pipeline between the condenser and the energy storage container, and the liquid-phase inflow interfaces of the plurality of energy storage containers are connected in parallel to the condenser through the liquid-phase inflow control valves.

7. The storage unit of the carbon dioxide gas-liquid-phase-change energy storage system according to any one of claims 1 to 6, further comprising:

an evaporator, connected to the energy storage container and configured to evaporate the carbon dioxide in the liquid state into the carbon dioxide in the gas state;
an energy release pressure-maintaining flow path, wherein the energy release pressure-maintaining flow path, the energy storage container and the evaporator form a closed-loop connection, such that the carbon dioxide in the liquid state inside the energy storage container is capable of being evaporated into the carbon dioxide in the gas state through the evaporator during the energy release phase of the energy storage system and a part of the carbon dioxide in the gas state flows back to the energy storage container, to maintain the pressure of the energy storage container stable within the design pressure range of the energy storage system during the energy release phase.

8. The storage unit of the carbon dioxide gas-liquid-phase-change energy storage system according to claim 7, wherein an energy release pressure-maintaining control valve configured to control opening and closing of the flow path is provided on the energy release pressure-maintaining flow path.

9. The storage unit of the carbon dioxide gas-liquid-phase-change energy storage system according to claim 8, wherein there are a plurality of energy storage containers, and each of the plurality of energy storage containers is provided with a gas-phase inflow interface; the gas-phase inflow interface is configured for the carbon dioxide in the gas state to flow into the energy storage container, and the gas-phase inflow interfaces of the plurality of energy storage containers are connected in parallel to the evaporator through the energy release pressure-maintaining control valves.

10. The storage unit of the carbon dioxide gas-liquid-phase-change energy storage system according to claim 9, wherein there are a plurality of energy storage containers, and each of the plurality of energy storage containers is provided with a liquid-phase outflow interface; the liquid-phase outflow interface is configured for the carbon dioxide in the liquid state to flow out from the energy storage container, a liquid-phase outflow control valve is provided on a connection pipeline between the evaporator and the energy storage container, and the liquid-phase outflow interfaces of the plurality of energy storage containers are connected in parallel to the evaporator through the liquid-phase outflow control valves.

11. A carbon dioxide gas-liquid-phase-change energy storage system, comprising the storage unit according to any one of claims 1 to 10.

12. A control method for the storage unit of the carbon dioxide gas-liquid-phase-change energy storage system according to any one of claims 1 to 10, comprising:
the energy storage phase, wherein the carbon dioxide in the gas state inside the energy storage container flows through the energy storage pressure-maintaining flow path to the condenser where the carbon dioxide in the gas state is condensed into the carbon dioxide in the liquid state, then the carbon dioxide in the liquid state flows back to the energy storage container, to maintain the pressure of the energy storage container stable within the design pressure range of the energy storage system during the energy storage phase.

13. The control method for the storage unit of the carbon dioxide gas-liquid-phase-change energy storage system according to claim 12, further comprising:
the interval period between the energy storage phase and the energy release phase, wherein when the pressure in the energy storage container is greater than the design pressure of the energy storage system, the carbon dioxide in the gas state inside the energy storage container flows out through the energy storage pressure-maintaining flow path to the condenser where the carbon dioxide in the gas state is condensed into the carbon dioxide in the liquid state, and the carbon dioxide in the liquid state flows back to the energy storage container, to maintain the pressure of the energy storage container stable within the design pressure range of the energy storage system during the interval period between the energy storage phase and the energy release phase.

100

120

energy storage
container 110

502

condenser 160

FIG. 1

<u>100</u>

evaporator 150

501

130

energy storage
container 110

120

502

condenser 160

FIG. 2

FIG. 3

FIG. 4

FIG. 5

FIG. 6

## INTERNATIONAL SEARCH REPORT

| International application No. |
|---|
| **PCT/CN2023/113571** |

**A. CLASSIFICATION OF SUBJECT MATTER**

F28D 20/02(2006.01)i; F17C 7/04(2006.01)i; F17D 1/00(2006.01)i; F17D 3/01(2006.01)i

According to International Patent Classification (IPC) or to both national classification and IPC

**B. FIELDS SEARCHED**

Minimum documentation searched (classification system followed by classification symbols)

IPC: F28D F17C F17D F25B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 百穰新能源科技, 二氧化碳, 相变, 存储, 冷凝器, 储能, 压力, 波动, 上升, 下降, 蒸发器, 保压, carbon dioxide, phase, transition, change, condenser, pressure, evaporator

**C. DOCUMENTS CONSIDERED TO BE RELEVANT**

| Category* | Citation of document, with indication, where appropriate, of the relevant passages | Relevant to claim No. |
|---|---|---|
| PX | CN 115406287 A (BAIRANG NEW ENERGY TECHNOLOGY (SHENZHEN) CO., LTD.) 29 November 2022 (2022-11-29) claims 1-13 | 1-13 |
| PX | CN 115406288 A (BAIRANG NEW ENERGY TECHNOLOGY (SHENZHEN) CO., LTD.) 29 November 2022 (2022-11-29) description, paragraphs [0036]-[0124], and figures 1-7 | 1-13 |
| Y | CN 112880451 A (SHENZHEN BROADWELL ENVIRONMENT TECHNOLOGY CO., LTD.) 01 June 2021 (2021-06-01) description, paragraphs [0004]-[0108], and figure 1 | 1-6, 11-13 |
| Y | CN 216347147 U (TECHNICAL INSTITUTE OF PHYSICS AND CHEMISTRY, CHINESE ACADEMY OF SCIENCES) 19 April 2022 (2022-04-19) description, paragraphs [0005]-[0101], and figures 1-5 | 1-6, 11-13 |
| A | CN 205561354 U (GREE ELECTRIC APPLIANCES INC. OF ZHUHAI) 07 September 2016 (2016-09-07) description, paragraphs [0025]-[0045], and figures 1-7 | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2023** | **16 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/113571**

| Patent document cited in search report | | | Publication date (day/month/year) | Patent family member(s) | | | Publication date (day/month/year) |
|---|---|---|---|---|---|---|---|
| CN | 115406287 | A | 29 November 2022 | None | | | |
| CN | 115406288 | A | 29 November 2022 | None | | | |
| CN | 112880451 | A | 01 June 2021 | WO | 2022166381 | A1 | 11 August 2022 |
| CN | 216347147 | U | 19 April 2022 | CN | 115823764 | A | 21 March 2023 |
| CN | 205561354 | U | 07 September 2016 | None | | | |

Form PCT/ISA/210 (patent family annex) (July 2022)